Europäisches Patentamt

European Patent Office

Office européen des brevets

(11) Publication number: **0 101 508**
**B1**

# EUROPEAN PATENT SPECIFICATION

(45) Date of publication of patent specification: **15.04.87**

(51) Int. Cl.⁴: **G 01 N 3/04**

(21) Application number: **83901035.2**

(22) Date of filing: **16.02.83**

(86) International application number:
**PCT/US83/00203**

(87) International publication number:
**WO 83/03003 01.09.83 Gazette 83/20**

(54) SIDE LOADING SPECIMEN GRIPS.

(30) Priority: **18.02.82 US 350056**

(43) Date of publication of application:
**29.02.84 Bulletin 84/09**

(45) Publication of the grant of the patent:
**15.04.87 Bulletin 87/16**

(84) Designated Contracting States:
**DE FR GB**

(56) References cited:
**DE-A-2 028 030**
**US-A-3 224 259**
**US-A-3 320 798**
**US-A-3 335 603**
**US-A-3 498 121**

**MTS Systems Corporation 1978, "Series 645
Tension Grips", Product Specification**

**The file contains technical information
submitted after the application was filed and
not included in this specification**

(73) Proprietor: **MTS SYSTEMS CORPORATION**
**14000 Technology Drive**
**Eden Prairie, MN 55344 (US)**

(72) Inventor: **CHRISTIANSEN, John A.**
**1019 15th Avenue S.E.**
**Minneapolis, MN 55414 (US)**

(74) Representative: **Bayliss, Geoffrey Cyril et al
BOULT, WADE & TENNANT 27 Furnival Street
London EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### 1. Field of the Invention

The present invention relates to side loading specimen grips that are hydraulically actuated without causing any substantial movement of the specimen during clamping.

### 2. Description of the Prior Art

In the prior art, various specimen grips have been advanced. Self aligning and hydraulically actuated gripsare shown in Patent No. 3,335,603 issued to Martin M. Gram, on August 15, 1967. In this patent the actuator cam for the grips is a cylindrical member and the specimen was to be installed from the end of the grip. Additionally, this patent shows a self aligning head connection to the actuator exerting the load on the specimen.

U.S. Patent No. 3,224,259 shows a typical side loading mechanically actuated grip for tensile testing, wherein there is longitudinal motion of the jaws relative to the grip during tension testing of the specimen.

The present device permits side loading of a specimen, and in particular flat plate-like specimens, and has actuated jaws that move only transverse to the longitudinal axis of the specimen, thereby substantially eliminating any induced load along the longitudinal axis of the specimen. The present device minimizes premature specimen loading, which, if of significant magnitude, could cause the specimen to yield or fail during gripping.

Grips such as those shown in U.S. Patent No. 3,335,603 have been sold as Model Series 641 Hydraulically Operated Grips. These grips show horizontal or transverse gripping motion but the outer housing completely encloses the wedge arrangement, and they do not permit loading of specimens from the side. Additionally, the MTS Systems Corporation have sold them as Series 645 Tension Grips since 1978 for gripping specimens for tension loading. This device is mechanically actuated but the wedges used for the grips tend to move vertically as they are locked onto the specimen. Another specimen testing grip is shown in US Patent No. 3,320,798 issued to Martin M. Gram, on May 23, 1967.

This invention provides a specimen grip assembly suitable for both tensile and compressive loading of a specimen and of the type having a main mounting body said main mounting body being adapted to be loaded by an actuator in direction along a longitudinal axis, means on said main mounting body defining a slide on an upper surface thereof, jaw means mounted on said slide for movement transverse to the longitudinal axis, said jaw means comprising a pair of opposed grip jaws mounted on said slide for simultaneous longitudinal movement therewith when the main mounting body is loaded by the actuator the grip jaws being movable toward and away from each other and having wedge surfaces thereon, a housing mounted on said main mounting body and having cam surfaces mating with said wedge surfaces so that upon movement of the housing relative to the main mounting body along said longitudinal axis in a first direction the cam surfaces force said jaws to move toward each other, and cooperating cylinder and piston means between said mounting body and said housing forming a chamber into which hydraulic fluid under pressure may be introduced to force the housing in direction along the longitudinal axis to tend to force the cam surfaces against the wedge surfaces and force the grip jaws together wherein said housing has a recess opening laterally of the grip jaws so that side portions of said grip jaws are accessible from the exterior of said housing and above the main mounting body to permit installation and removal of a specimen from a side of the grip jaws and specimen grip assembly without the need for longitudinal movement of the grip jaws.

The housing for actuating the jaws is securely mounted in the clamp body of the grip, the clamping force can be made sufficient so the specimen is held without further grip movement during application of the full testing force. Specimen insertion is possible from the side of the grip jaws in between the two jaws, and an adjustable stop is mounted adjacent the jaws to locate the specimen on the grip center line. The stop is adjustable to accommodate specimens of different widths, and greatly aids in loading specimens when a series of specimens of the same size would be tested.

As the hydraulic preload is applied the outer housing of the grip is moved to actuate on the grip jaw wedge surfaces and force the jaws against the specimen in a direction perpendicular to the longitudinal axis of the specimen. A bias means, such as a spring, is positioned between the grip jaws to cause separation when the hydraulic pressure exerting the clamping force is released.

The outer grip body is made in two pieces that are held together with highly loaded cap screws, and the two pieces pilot together to keep the outer body portion wedges from yielding under load when the grip is being used.

The grip is made so that it can be used in either tension or compression loading if desired, although tension loading is normally the type of loading used on sheet metal specimens for which the grip is primarily designed. Of course, the jaws of the grip are adaptable for acceptance of other specimen configurations also, such as cylindrical end specimens.

Brief Description of the Drawings

Figure 1 is a fragmentary schematic view of a typical testing machine in which the grip of the present invention is utilized;

Figure 2 is a sectional view looking down on the lower grip and taken as on line 2—2 in Figure 1;

Figure 3 is a side view of the device of Figure 2;

Figure 4 is a sectional view taken as on line 4—4 in Figure 2; and

Figure 5 is a fragmentary sectional view taken as on line 5—5 in Figure 4.

Detailed Description of the Preferred Embodiments

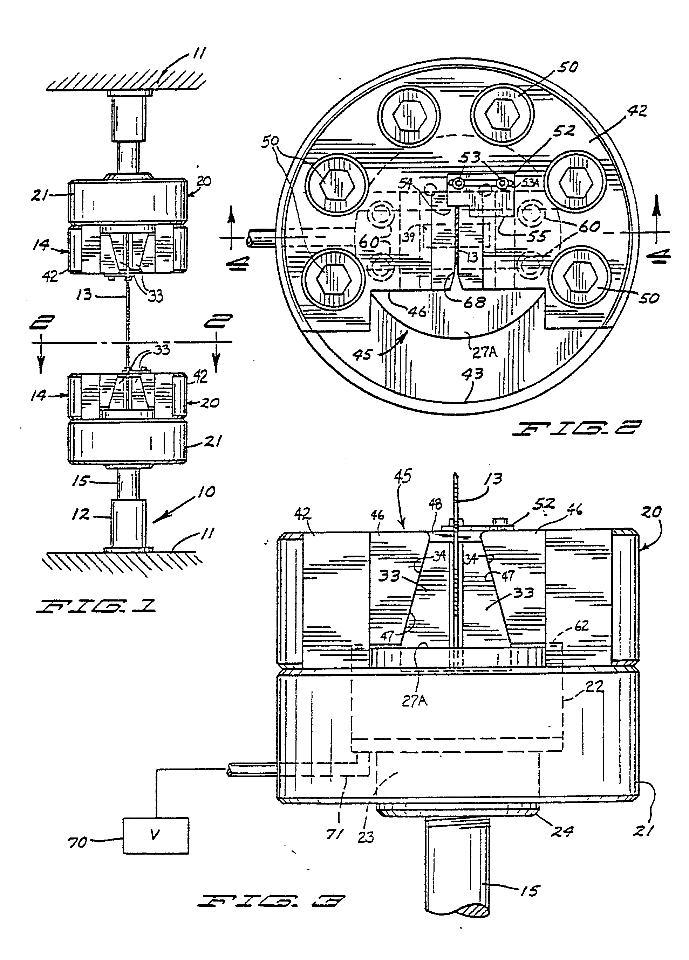

A testing machine indicated schematically at 10 includes a frame 11 which is an ordinary load frame commonly used for tensile testing of specimens, and is represented only by supports in Figure 1. The load frame 11 includes an actuator 12 of conventional design that is used for applying either a tension load, a compression load, or an alternating tension and compression load on a specimen indicated at 13 that is held in a pair of grips 14, 14. The grips 14 made according to the present invention are made so that the specimen 13 (shown as plate steel) can be loaded from the side of the grips 14. The upper grip 14 is attached to the load frame 11 in any suitable manner, and the lower grip 14, as will be shown, is attached to the actuator rod 15 of the actuator 12.

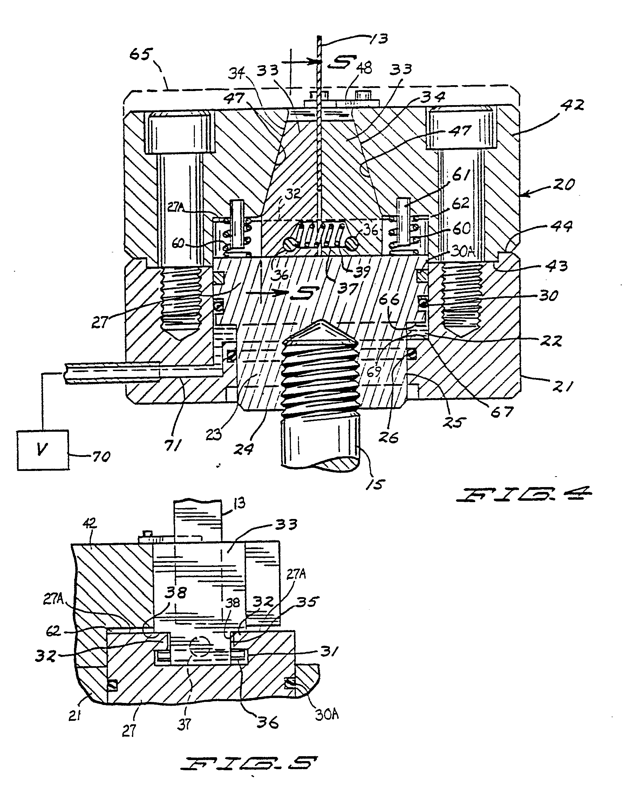

Referring now to Figures 2 through 5, each of the grips 14 is made up to be hydraulically actuated and comprises an outer grip body housing 20 that is made in two sections. The base or lower body section indicated at 21 of the grip housing 20 has a chamber or bore 22 defined therethrough which forms a hydraulic cylinder. The bore 22 has a grip jaw mounting body assembly 23 that has a neck 24 extending through a neck portion 25 of bore 22. The neck 24 in turn is attached to the hydraulic actuator rod 15, and therefore is carried by the rod 15. The neck 24 is sealed from leaking hydraulic fluid with an O-ring 26. The mounting body assembly 23 includes a piston portion 27 which fits inside the upper portion of chamber 22. The piston portion 27 is sealed with an O-ring 30, and a wiper 30A is used if desired.

The upper end of the grip jaw mounting body assembly 23 has a T-slot 31 defined therein, as shown in Figure 5. The T-slot 31 is formed by a cross channel or slot having a pair of overhanging shoulders 32, 32. A pair of hardened jaws 33 are provided, with each jaw 33 having an outer wedge surface 34 and an integral shank or tang member 35 which extends between the overhanging shoulders 32, 32 and into the T-slot 31. The shank or tang member 35 of each of the grip jaws has a cross member 36 that extends under the shoulders 32 to hold the jaws 33 in place in the T-slot 31 as shown in Figure 4. Additionally, the jaws 33 are each provided with an internal recess 37 for mounting a bias means, such as a spring 39, which loads the jaws 33 apart or tends to separate the two jaws 33. The shoulders 32 and T-slot 31 form a slide for the jaws 33 as they are actuated.

An upper surface of the mounting assembly 23 forms an upper hardened surface 27A (the upper surfaces of shoulders 32) along the edges of the T-slot 31 and the jaws 33 have hardened overhanging surfaces 38 on opposite sides of the tang 35 which ride on the upper hardened surfaces 27A of the shoulders 32, 32 so that the hardened surfaces 27A ad 38 ride together when the grip 14 is actuated.

The outer grip housing 20 further includes an upper body section 42, one side of which is partially cut away, as shown in Figure 2. The lower edge of the upper body section 42 has an annular pilot member 43 that fits inside an annular flange 44 on the lower body section 21. The flange 44 forms an annular shoulder around the lower body section 21. As can be seen in Figure 2, the upper section 42 is cut away along one side, as shown at 45. This cut away or recess 45 forms a pair of surfaces 46 on the upper body section 42 that are substantially vertical surfaces. The surfaces 46 are on opposite sides of a pair of camming surfaces 47, 47 that are formed on an internal cavity 48 of the upper body section 42. The surfaces 47 engage the wedge surfaces 34 of the jaws 33. The cavity 48, which extends to the top or upper end of the upper body section 42, is thus laterally open through the recess 45. The space between the jaws 33, which defines the opening in which a specimen 13 can be inserted, is accessible from the side of the grip 14 through recess 45.

The recess 45 therefore provides a direct access from the side into the grip jaws 33, 33 and permits inserting a specimen 13 between the jaws 33 when the jaws 33 are separated or loosened.

The upper body section 42 fits securely in place with the pilot member 43 inside the flange 44. Cap screws indicated at 50 are threaded into the lower body section 21. These cap screws can provide a substantial preload of the upper body section 42 against the lower body section 21, and this will keep the body sections 21 and 42 from separating when the grip 14 is actuated.

The upper end of the body section 42 is used for mounting an adjustable specimen stop 52 that is held in place with a pair of cap screws 52, 53. The stop 52 is adjustable by having a slot 53A in the stop 52 for the cap screws 53, so that a plurality of different positions are provided. As shown, edges 54 and 55 provide stop positions.

The grip housing 20 is urged in a direction away from the piston portion 27 of the grip jaw mounting body assembly 23 by bias means, such as four springs indicated at 60 that are held inside the T-slot 31 and passed between the shoulders 32, 32. These springs 60 are held in place with dowels 61 that are fastened into the upper body section 42 and protrude downwardly into the T-slot 31. The shoulders 32 can be recessed for providing spring clearance.

Note that the upper body section 42, in addition to having the cam surfaces 47, has a bore indicated at 62 aligned with bore 22 into which the piston portion 27 of the jaw mounting body assembly 23 can move. Furthermore, when the grip 14 is actuated, there is clearance between the upper surface 27A and the upper end of the bore 62, as shown in Figure 5.

Figures 3 and 4 show the grip 14 clamped, and thus the grip housing 20 is forced downwardly relative to the grip jaw mounting body assembly 23, so that the clearance at the top of the piston portion 27 in bore 62 is relatively small. The springs 60 urge the grip housing 20 upwardly when hydraulic pressure is released from the grip 14.

Actuation

When a specimen 13 is to be inserted, the springs 60, as well as the spring 39, urge the jaws 33 apart and the housing 20 upwardly as shown in dotted lines 65 in Figure 4. This reduces the spacing between the underside 66 of the piston portion 27 and a mating surface 67 of the bore or chamber 22. The space between these surfaces in bore 22 forms the active hydraulic cylinder chamber 69 (it is an annular chamber) for actuating the grip 14.

Once the specimen 13 has been slid in between the jaw gripping surfaces indicated at 68 in Figure 2, hydraulic pressure is supplied from a valve shown schematically at 70 through a suitable conduit indicated in dotted lines at 71 into the hydraulic cylinder chamber 69. This hydraulic pressure acts between the surfaces 66 and 67 to force the lower body section 21 downwardly relative to the grip jaw mounting body assembly 23, and of course, the cap screws 50 will carry the upper body section 42 downwardly as well. In turn, the camming surfaces 47 acting on the wedge surfaces 34 of the jaws 33 tend to move the jaws 33 horizontally toward each other. The shoulder surfaces 38 of the jaws 33 ride on the upper surface 27A of the shoulders 32 and move only horizontally (the grip jaw mounting body assembly 23 carries the jaws 33) so relative axial movement between the specimen 13 and the grip 14 is virtually eliminated. Note that the actuator rod 15 holds the grip jaw mounting body assembly 23 in its desired position during the actuation of the grip 14, which actuates the grip housing 20 to move the jaws 33 horizontally toward each other.

By using a high enough hydraulic pressure, the gripping action (and the clamping force of the jaws 33) becomes sufficiently high to preload the grips 14 to a point where there is virtually no change in grip force nor relative movement between the jaws 33 and the surfaces 47 when the actuator 12 is operated for loading the specimen 13.

In addition, by employing a straight horizontal jaw movement, which also is defined as movement perpendicular to the longitudinal axis of the specimen, the specimen stresses are minimized during the initial gripping action. Therefore, there is virtually no axial movement of the specimen.

When the specimen 13 has been tested, either to failure or the like, and the parts are to be removed from the grips 14, the pressure from valve 70 to each grip 14 is released, and the springs 60 together with the springs 39 force the upper body section 42 upwardly relative to the piston assembly and the jaws 33 outwardly to release the specimen 13.

The forces from the wedging action which tend to separate the cam surfaces 47, 47 of the upper body section 42 are resisted by the cap screws 50 and the reaction of forces against the shoulder surface formed by the annular flange 44.

The cap screws 50 can be preloaded, so there will be no movement of the upper body section 42 separating the surfaces 47, 47 under normal load. The load path from the actuator rod 15 is through the hydraulic fluid under pressure in chamber 69 and through the cap screws 50 to the jaws 33. The jaws 33 are preloaded to a point where the tension load on the actuator rod 15 is less than the force being exerted by the hydraulic fluid under pressure in chamber 69 and thus the load path is such that the jaws 33 do not loosen their grip on the specimen 13, either during compression or tension loading. There is a constant preload, or constant clamping force on the specimen 13 so that the specimen loading does not change during testing. The specimen 13 as shown is a steel metal specimen, and thus relatively lightweight. Of course, the jaws 33 of the grip 14 can be adapted (or replaced) for acceptance of other types of specimens 13, such as cylindrically ended specimens.

If the grip jaws 33 are to be removed, the cap screws 50 are taken out, and the upper body portion 42 removed from the lower body section 21. This permits the springs 60 to be moved out of the T-slot 31 because dowel 61 will be removed with the upper body section 42, and the jaws 33 then can be slid out of the end of the T-slot 31 formed in the grip jaw mounting body assembly 23.

Therefore, if the jaw surfaces wear or if different jaws are to be placed into the grip assembly, this can be done relatively quickly and easily.

When the grip is reassembled, the cap screws 50 are again tightened down to provide a sufficient preload for the amount of load that is to be exerted by the grip jaws 33.

The terms "upper" and "lower" have been used in the description, but as clearly can be seen in Figure 1 the grips 14 may be inverted. Thus these designations are for relative orientation only.

**Claims**

1. A specimen grip assembly suitable for both tensile and compressive loading of a specimen and of the type having a main mounting body (23), said main mounting body (23) being adapted to be loaded by an actuator (12) in direction along a longitudinal axis, means on said main mounting body (23) defining a slide on an upper surface (27A) thereof, jaw means mounted on said slide for movement transverse to the longitudinal axis, said jaw means comprising a pair of opposed grip jaws (33) mounted on said slide for simultaneous longitudinal movement therewith when the main mounting body (23) is loaded by the actuator (12), the grip jaws (33) being movable toward and away from each other and having wedge surfaces (34, 34) thereon, a housing (20) mounted on said main mounting body (23) and having cam surfaces (47) mating with said wedge surfaces (34) so that upon movement of the housing (20) relative to the main mounting body (23) along said longitudinal axis in a first direction the cam surfaces (47) force said jaws (33) to move toward each other, and cooperating cylinder and piston means (21, 27) between said mounting body (23) and said housing (20) forming a chamber (69) into which hydraulic fluid under pressure may be introduced to force the housing (20) in direction along the longitudinal axis to tend to force the cam surfaces (47) against the wedge surfaces (34) and force the grip jaws (33) together, characterised in that said housing (20) has a recess (45) opening laterally of the grip jaws so that side portions of said grip jaws (33) are accessible from the exterior of said housing (20) and above the main mounting body (23) to permit installation and removal of a specimen from a side of the grip jaws (33) and specimen grip assembly without the need for longitudinal movement of the grip jaws (33).

2. The grip assembly of claim 1 wherein said housing (20) comprises two members, a lower member (21) formed in combination with the main body (23) to define the hydraulic cylinder means and an upper member (42) having the cam surfaces (47) defined therein, the recess (45) being on said upper member (42) and opening to said cam surfaces (47) laterally of said longitudinal axis to permit access to said grip jaws (33) and said upper member (42) being longitudinally immovably secured to said lower member (21).

3. The grip assembly of claim 2 wherein said upper member (42) is mounted on said lower member (21) with a plurality of preloaded cap screws (50).

4. The grip assembly of claim 3 wherein cooperating pilot shoulder means (43, 44) is provided between the upper and lower members (21, 42) of the housing (20) tending to prevent separation of the housing (20) radially outward from the longitudinal axis thereof.

5. The grip assembly of claim 1 wherein said slide comprises the upper surface (27A) of said main mounting body (23) said upper surface (27A) having a slot defined therein extending transverse to said longitudinal axis across said mounting body (23), said slot comprising a T-shaped slot (31) formed by overhanging shoulders (32) on which the grip jaws (33) slide, said grip jaws (33) having a tang portion (35) extending into said slot (31).

6. The grip assembly of claim 1, further comprising an adjustable specimen stop (52) for alignment of the specimen relative to the longitudinal axis.

**Patentansprüche**

1. Einspannvorrichtung für eine Probe, wobei die Einspannvorrichtung sowohl für eine Zugebelastung als auch für eine Druckbelastung der Probe geeignet ist und einen Hauptmontagekörper (23), der durch ein Betätigungsglied (12) in der Richtung der Längsache belastet werden kann, eine an dem Hauptmontagekörper (23) vorgesehene Einrichtung, die auf der oberen Oberfläche (27A) desselben ein Gleitteil bestimmt, eine an dem Gleitteil für eine Bewegung quer zur Längsache montierte Klemmvorrichtung, die ein Paar von sich gegenüberliegenden Greifbacken (33) besitzt, die an dem Gleitteil zur Ausführung einer gleichzeitigen Längsbewegung mit dem Gleitteil, wenn der Hauptmontagekörper (23) durch das Betätigungsglied (12) belastet wird, befestigt sind, wobei die Greifbacken (33) aufeinander zu und voneinander weg bewegbar sind und Keilflächen (34, 34) aufweisen, ein an dem Hauptmontagekörper (23) befestigtes Gehäuse (20), das zu den Keilflächen (34) passende Nockenflächen (47) aufweist, so daß bei der Bewegung des Gehäuses (20) relativ zu dem Hauptmontagekörper (23) entlang der Längsachse in einer ersten Richtung die Nockenflächen (47) die Backen (33) so drücken, daß sie sich aufeinander zubewegen, und eine zusammenwirkende Zylinder- und Kolbeneinrichtung (21, 27) aufweist, die zwischen dem Montagekörper (23) und dem Gehäuse (20) angeordnet ist und eine Kammer (69) bildet, in die ein hydraulisches Fluid unter Druck eingeführt werden kann, um das Gehäuse (20) in eine Richtung entlang der Längsachse zu drücken, um die Nockenflächen (47) gegen die Keilflächen (34) zu drücken und um die Greifbacken (33) zusammenzudrücken, dadurch gekennzeichnet, daß das Gehäuse (20) eine Vertiefung (45) aufweist, die sich seitlich von den Greifbacken derart öffnet, daß Seitenbereiche der Greifbacken (33) von dem Äußeren des Gehäuses (20) und von oberhalb des Hauptmontagekörpers (23) her zugänglich sind, um den Einbau und die Entfernung einer Probe von einer Seite der Greifbacken (33) und der Einspannvorrichtung her zu ermöglichen, ohne daß eine Längsbewegung der Greifbacken (33) erforderlich ist.

2. Einspannvorrichtung nach Anspruch 1, bei der das Gehäuse (20) zwei Teile umfaßt, wobei ein unteres Teil (21) zusammen mit dem Hauptmontagekörper (23) ausgebildet ist, um die hydraulische Zylindereinrichtung zu bilden, und in einem oberen Teil (42) die Nockenflächen (47) ausgebildet sind, wobei die Vertiefung (45) an dem oberen Teil (42) vorgesehen ist und sich zu den Nockenflächen (47) seitlich von der Längsachse öffnet, um den Zugang zu den Greifbacken (33) zu ermöglichen, und wobei das obere Teil (42) in Längsrichtung unbeweglich an dem unteren Teil (21) befestigt ist.

3. Einspannvorrichtung nach Anspruch 2, bei der das obere Teil (42) auf dem unteren Teil (21) durch eine, Mehzahl von vorgespannten Kopfschrauben (50) befestigt ist.

4. Einspannvorrichtung nach Anspruch 3, bei der zusammenwirkende Anschlag-Schultereinrichtungen (33, 44) zwischen dem oberen und unteren Teil (21, 42) des Gehäuses (20) vorgesehen sind, die dazu neigen, eine Trennung des Gehäuses (20) von seiner Längsachse in radialer Richtung nach außen zu verhindern.

5. Einspannvorrichtung nach Anspruch 1, bei der das Gleitteil die obere Oberfläche (27A) des Hauptmontagekörpers (23) umfaßt, wobei in der oberen Oberfläche (27A) ein Schlitz ausgebildet ist, der sich quer zur Längsachse über den Montagekörper (23) erstreckt, wobei der Schlitz einen durch überhängende Schultern (32) gebildeten T-förmigen Schlitz (31) umfaßt, in dem die Greifbacken (33) gleiten, und wobei die Greifbacken (33) einen sich in den Schlitz (31) erstreckenden Stiftbereich (35) aufweisen.

6. Einspannvorrichtung nach Anspruch 1, bei der außerdem ein einstellbarer Probenanschlag (52) zur Ausrichtung der Probe relativ zur Längsachse vorgesehen ist.

## Revendications

1. Pince pour éprouvettes, covenant à la fois à des efforts de traction et à des efforts de compression exercés sur des éprouvettes, du type comprenant une pièce (23) formant un support principal ou porte-pince, qui est conçue pour être chargée suivant un axe longitudinal par un appareil (12) produisant l'effort à appliquer à l'éprouvette, un dispositif définissant une glissière sur une surface supérieure (27A) de ce support (23), un dispositif de serrage monté mobile sur cette glissière, transversalement à l'axe longitudinal, et constitué de deux mors opposés (33), lesquels sont montés sur la glissière pour se déplacer simultanément le long de celle-ci lorsque le support principal (23) est chargé par ledit appareil (12), les mors (33) pouvant être approchés et écartés l'un de l'autre et présentant des surfaces obliques (34) agissant à la façon de coins, un corps externe de pince (20), monté sur le support principal (23) et présentant des surfaces d'actionnement (47) complémentaires aux surfaces obliques (34), de manière que le mouvement du corps (20) par rapport au support (23) dans une première direction, suivant ledit axe longitudinal, ait pour effet que les surfaces d'actionnement (47) forcent les mors (33) à s'approcher mutuellement, ainsi que des éléments (21, 27) formant un vérin de serrage entre le support (23) et le corps externe (20), ce vérin possédant une chambre (69) dans laquelle du fluide hydraulique sous pression peut être introduit pour déplacer le corps (20) suivant l'axe longitudinal et produire ainsi l'application des surfaces d'actionnement (47) contre les surfaces obliques (34) des mors (33) et le pressage des mors l'un contre l'autre, caractérisée en ce que le corps externe (20) possède une découpe (45) à côté des mors, de manière que des parties latérales des mors soient accessibles de l'extérieur du corps (20) et au-delà du support principal (20), afin de permettre la mise en place et l'enlèvement d'une éprouvette latéralement par rapport aux mors (33) et a l'ensemble de la pince, sans que cela demande un mouvement longitudinal des mors (33).

2. Pince selon la revendication 1, dans laquelle le corps externe (20) est composé de deux parties: une partie inférieure (21) qui est conformée, en combinaison avec le support principal (23), pour définir le vérin de serrage hydraulique, ainsi qu'une partie supérieure (42), dans laquelle sont formées les surfaces d'actionnement ou de serrage (47) la découpe (45) étant située sur la partie supérieure (42) du corps et formant une ouverture allant jusqu'aux surfaces d'actionnement (47) et s'étendant latéralement par rapport audit axe longitudinal, afin de permettre l'accès aux mors (33), la partie supérieure (42) étant fixée de façon immobile longitudinalement à la partie inférieure (21) du corps.

3. Pince selon la revendication 2, dans laquelle la partie supérieure (42) est montée sur la partie inférieure (21) du corps au moyen de plusieurs vis à tête cylindrique (50) qui sont précontraintes.

4. Pince selon la revendication 3, dans laquelle des moyens d'emboîtement coopérants (43, 44) sont prévus entre les parties supérieure et inférieure (21, 42) du corps (20) pour contribuer à empêcher la séparation ou la déformation du corps (20) radialement vers l'extérieur par rapport à son axe longitudinal.

5. Pince selon la revendication 1, dans laquelle la glissière comporte une surface supérieure (27A) du support principal (23) surface dans laquelle est ménagée une rainure s'étendant transversalement audit axe longitudinal au travers du support principal (23), la rainure (31) ayant en section droite une forme en T définie en partie par des rebords (32) fermant la rainure partiellement et sur lesquels coulissent les mors (33) de la pince, lesquels possèdent un pied (33) qui se prolonge dans la rainure (31).

6. Pince selon la revendication 1, comprenant en outre une butée d'eprouvettes réglable (52) pour aligner l'éprouvette par rapport à l'axe longitudinal.

0 101 508

FIG.1

FIG.2

FIG.3

1

FIG.4

FIG.5